# EUROPÄISCHE PATENTSCHRIFT

(11) **EP 1 530 688 B1**
(45) Veröffentlichungstag und Bekanntmachung des Hinweises auf die Patenterteilung: **23.07.2008**
(21) Anmeldenummer: 03793727.3
(22) Anmeldetag: 11.08.2003
(51) Int. Cl.: F16D 66/00

(54) **BETÄTIGUNGSEINHEIT FÜR EINE ELEKTROMECHANISCH BETÄTIGBARE SCHEIBENBREMSE**
ACTUATION UNIT FOR AN ELECTROMECHANICALLY OPERATED DISK BRAKE
UNITE D'ACTIONNEMENT CONÇUE POUR UN FREIN A DISQUE A ACTIONNEMENT ELECTROMECANIQUE

(30) Priorität: 14.08.2002 DE 10237180; 24.10.2002 DE 10249478; 02.04.2003 DE 10314798
(43) Veröffentlichungstag der Anmeldung: 18.05.2005
(73) Patentinhaber: Continental Teves AG & Co. oHG, 60488 Frankfurt am Main (DE)
(72) Erfinder: BAYER, Bernward, 63322 Rödermark/Ober-Roden (DE); HÄRTEL, Volker, 82110 Germering (DE); KELLING, Enno, 65760 Eschborn (DE); LINHHOFF, Paul, 61267 Neu-Anspach (DE); PILLER, Bernd, 63303 Dreieich (DE); SCHIRLING, Andreas, 64319 Pfungstadt (DE); SCHMITTNER, Bernhard, 63768 Hösbach (DE); VÖLKEL, Jürgen, 60389 Frankfurt am Main (DE)
(86) Internationale Anmeldenummer: PCT/EP2003/008907
(87) Internationale Veröffentlichungsnummer: WO 2004/022998

(56) Entgegenhaltungen:
- EP-A- 0 548 927
- WO-A-01/73312
- "Micro-Measurements Catalog 500" Juni 2000 (2000-06) , INTERTECHNOLOGY INC. , DON MILLS, ONTARIO, CANADA XP002261964 Seite 74 -Seite 75

## Beschreibung

Die Erfindung betrifft eine Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe zusanmenwirkende Reibbeläge begrenzt verschiebbar angeordnet sind, wobei einer der Reibbeläge mittels des Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, wobei die Betätigungseinheit aus einem Elektromotor sowie mindestens einem wirkungsmäßig zwischen den Elektromotor und dem ersten Reibbelag angeordneten Untersetzunggetriebe gebildet ist, und wobei das Untersetzungsgetriebe als ein Gewindetrieb ausgebildet ist, der in einen Getriebegehäuse angeordnet ist und ein zylindrisches Führungsteil aufweist, an dem eine Sensoreinrichtung zum Erfassen der Reaktionskraft befestigt ist.

Eine derartige, elektromechanisch arbeitende Betatigungseinheit ist aus der internationalen Patentanmeldung WO 01/73312 A1 bekannt. Bei der vorbekannten Betätigungseinheit erfolgt die Ermittlung der Reaktionskraft mittels Dehnungsmessstreifen (DMS), die auf die Oberfläche des Führungsteiles aufgeklebt sind.

Als nachteilig wird bei der vorbekannten Betätigungseinheit insbesondere die Tatsache empfunden, dass die Montage der Dehnungsmessstreifen auf dem Führungsteil für einen industrialisierbaren Prozess wenig geeignet ist.

Aus dem Micro-Measurements Catalog 500 sind vorgefertigte und prüfbare Sensoren und Sensormodule bekannt. Eine Anordnung der Sensormodule bei einer elektromechanisch arbeitenden Betätigungseinheit der eingangs genannten Gattung ist dagegen nicht offenbart.

Es ist daher Aufgabe der vorliegenden Erfindung, eine Betätigungseinheit der eingangs genannten Gattung vorzuschlagen, die für eine wirtschaftliche Großserienfertigung geeignet ist.

Diese Aufgabe wird erfindungsgemäß dadurch gelöst, dass das Führungsteil im Befestigungsbereich der Sensoreinrichtung eine radiale Öffnung aufweist, wobei in oder, in radialer Richtung des Führungsteiles gesehen, oberhalb der Öffnung ein vorgefertigtes und außerhalb des Führungsteiles prüfbares Sensormodul angeordnet ist, das die Sensoreinrichtung bildet.

Vorteilhafte Weiterbildungen der Erfindung sind in den in Patentansprüchen 2 bis 7 erläutert.

Die Erfindung wird in der nachfolgenden Beschreibung eines Ausführungsbeispiels unter Bezugnahme auf die beiliegende Zeichnung näher erläutert. In der Zeichnung zeigt:
- Fig. 1: eine Ausführung der erfindungsgemäßen, elektromechanischen Betätigungseinheit im Axialschnitt,
- Fig. 2: eine vereinfachte Darstellung des bei der Ausführung nach Fig. 1 verwendeten Führungsteiles, und
- Fig. 3: eine vereinfachte Darstellung eines anderen, bei der Ausführung nach Fig. 1 verwendbaren Führungsteiles.

Die in der Zeichnung gezeigte, elektromechanisch betätigbare Scheibenbremse nach der Erfindung besteht im wesentlichen aus einem Bremssattel bzw. Schwimmsattel 1, der in einem nicht gezeigten feststehenden Halter verschiebbar gelagert ist, einer teilweise im Axialschnitt dargestellten Antriebseinheit 2 sowie einer Bremsscheibe 3. Ein Paar von Reibbelägen 4 und 5 ist im Bremssattel 1 derart angeordnet, dass sie der rechten und der linken Seitenfläche der Bremsscheibe 3 zugewandt sind.

Nachstehend wird der in der Zeichnung rechts gezeigte Reibbelag 4 als erster bzw. innerer Reibbelag und der andere, mit 5 bezeichnete Reibbelag als zweiter bzw. äußerer Reibbelag bezeichnet. Während der erste Reibbelag 4 mittels eines Betätigungselements 7 durch die Betätigungseinheit 2 direkt mit der Bremsscheibe 3 in Eingriff bringbar ist, wird der zweite Reibbelag 5 durch die Wirkung einer bei der Betätigung der Anordnung vom Bremssattel 1 aufgebrachten Reaktionskraft gegen die gegenüberliegende Seitenfläche der Bremsscheibe 3 gedrückt, so dass auf die Bremsscheibe 3 eine Bremskraft ausgeübt wird. Der zweite Reibbelag 5 kann dabei mit dem Bremssattel 1 fest verbunden sein.

Die Betätigungseinheit, die mittels nicht gezeigter Befestigungsmittel am Bremssattel 1 angebracht ist, besteht im wesentlichen aus zwei trennbaren, unabhängig voneinander prüfbaren Baugruppen bzw. Modulen, und zwar aus einer Antriebseinheit bzw. einem Elektromotor 10 sowie einem den ersten Reibbelag 4 betätigenden Untersetzungsgetriebe 11.

Das Untersetzungsgetriebe 11 ist bei dem gezeigten Beispiel als ein Kugelgewindetrieb 16 bis 18 ausgebildet, das in einem Getriebegehäuse 19 gelagert ist, das auch einteilig mit dem vorhin erwähnten Bremssattel 1 ausgeführt sein kann. Der Kugelgewindetrieb besteht dabei aus einer Gewindemutter 16 sowie einer Gewindespindel 17, wobei zwischen der Gewindemutter 16 und der Gewindespindel 17 mehrere Kugeln 18 angeordnet sind, die bei einer Rotationsbewegung der Gewindespindel 17 umlaufen und die Gewindemutter 16 in eine axiale bzw. translatorische Bewegung versetzen.

Die Anordnung ist dabei vorzugsweise derart getroffen, dass der nicht näher dargestellte Rotor des Elektromotors 10 die Gewindespindel 17 antreibt, während die Gewindemutter 16, die das vorhin erwähnte Betätigungselement 7 bildet, mit dem ersten Reibbelag 4 derart gekoppelt ist, dass eine Übertragung sowohl von Druck- als auch Zugkräften stattfindet. Außerdem ist ein topfförmiges, den Kugelgewindetrieb 16 - 18 radial umgreifendes Führungsteil 20 vorgesehen, das sich am Getriebegehäuse 19 axial abstützt und in dem die Gewindemutter 16 axial verschiebbar gelagert ist. Die Lagerung der Gewindemutter 16 im Führungsteil 20 erfolgt in ihrem dem ersten Reibbelag 4 zugewandten Bereich mittels eines im Führungsteil 20 angeordneten Gleitringes 25.

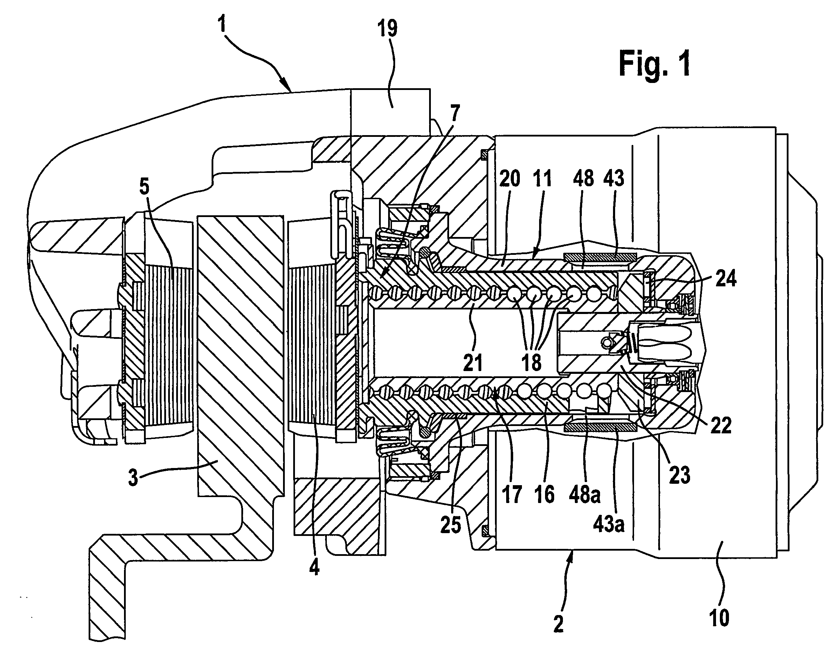

Die vom Elektromotor 10 angetriebene Gewindespindel 17 ist im dargestellten Beispiel dreiteilig ausgebildet und besteht aus einem mit der Gewindemutter 16 zusammenwirkenden rohrförmigen ersten Spindelteil 21, einem mit dem Elektromotor 10 zusammenwirkenden zweiten Spindelteil 22 sowie einem ringförmigen dritten Spindelteil 23, das sich an einem im Führungsteil 20 angeordneten Axiallager 24 abstützt. Dabei begrenzt das erste Spindelteil 21 mit der Gewindemutter 16 wendelförmige Gewinderillen, in denen die Kugeln 18 umlaufen. Der Erfassung einer bei der Betätigung der Scheibenbremse vom Bremssattel 1 aufgebrachten Reaktionskraft dient mindestens eine in Fig. 1 lediglich schematisch angedeutete Sensoreinrichtung 43, 43a, wobei das Führungsteil 20 im Befestigungsbereich der Sensoreinrichtungen Öffnungen 48, 48a aufweist.

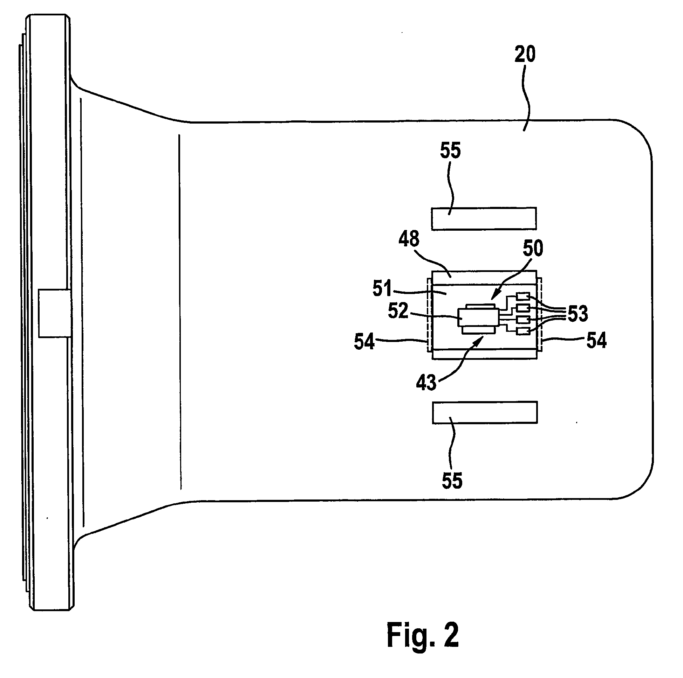

Wie insbesondere Fig. 2 zu entnehmen ist, ist die vorhin erwähnte Sensoreinrichtung 43, die eine indirekte Ermittlung der Betätigungs- bzw. Spannkraft anhand der axialen Deformation des Führungsteiles 20 ermöglicht, als ein extern gefertigtes, selbständig prüfbares Sensormodul 50 ausgebildet. Das Sensormodul 50 besteht im wesentlichen aus einem vorzugsweise metallischen Trägerelement 51, einem Messelement 52 sowie lediglich schematisch angedeuteten Kontaktstellen 53. Die Befestigung des Sensormoduls 50 auf dem Führungsteil 20 erfolgt mittels Laserschweißen, wie durch Schweißnähte 54 angedeutet ist. Auf beiden Seiten der Öffnung 48 ausgebildete Schlitze 55 dienen einer thermischen Entlastung des Befestigungsbereichs des Sensormoduls 50, das durch Temperaturprozesse mit dem Führungsteil 20 verbunden werden kann, ohne dass sich temperaturbedingte Verspannungen auf die Umgebung der Sensoreinrichtung 43 auswirken.

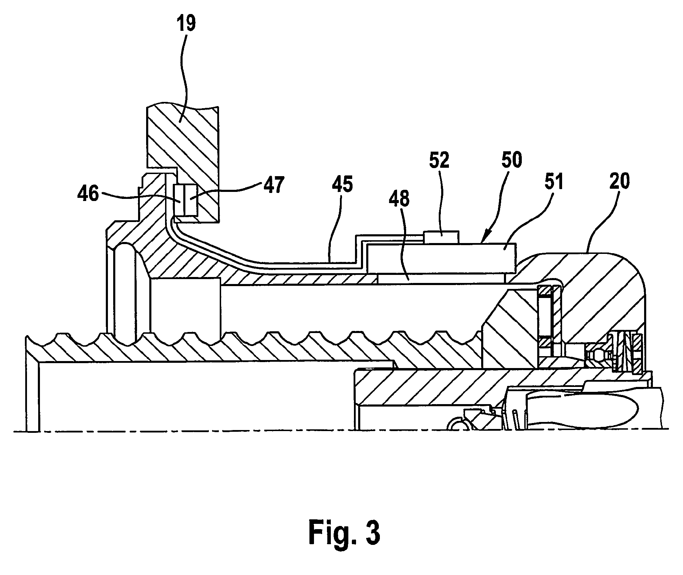

Fig. 3 zeigt schließlich eine andere Ausführungsvariante des Sensormoduls 50, dessen Trägerelement 51 als ein Zugkörper ausgebildet ist. Dem elektrischen Anschluss des Sensormoduls 50 dient ein vorzugsweise aus Metall gestanztes Kontaktgitter 45, das auf dem Führungsteil 20 befestigt ist und zu einer elektrischen Schnittstelle 46 führt. Alternativ kann zur Kontaktierung eine Flexfolie, Kabel etc. vorgesehen werden. Die Schnittstelle 46 ist vorzugsweise als ein am Führungsteil 20 befestigter Stecker ausgeführt. Die elektrische Verbindung mit einer nicht dargestellten Auswerteelektronik erfolgt bei der Endmontage mittels eines im Getriebegehäuse 19 integrierten Gegensteckers 47. Die gleiche Art der Kontaktierung kann selbstverständlich auch bei der in Fig. 2 dargestellten Variante verwendet werden.

Im Rahmen der vorliegenden Erfindung sind selbstverständlich auch zahlreiche Modifikationen denkbar. So kann z. B. zwischen dem als Antriebseinheit dienenden Elektromotor 10 und dem Untersetzungsgetriebe 2 ein zweites Untersetzungsgetriebe, vorzugsweise ein Planetengetriebe, vorgesehen sein. Vorstellbar sind selbstverständlich z. B. auch Getriebe, die mittels eines verformbaren, gezahnten Ringes und einer Exzentrizität große Untersetzungen erzielen.

## Patentansprüche

1. Betätigungseinheit für eine elektromechanisch betätigbare Scheibenbremse für Kraftfahrzeuge, die an
einem Bremssattel angeordnet ist, in dem zwei mit je einer Seitenfläche einer Bremsscheibe (6) zusammenwirkende Reibbeläge (4,5) begrenzt verschiebbar angeordnet sind,
wobei einer (4) der Reibbeläge (4,5) mittels des Betätigungselementes (7) durch die Betätigungseinheit direkt und der andere Reibbelag (5) durch die Wirkung einer vom Bremssattel aufgebrachten Reaktionskraft mit der Bremsscheibe (3) in Eingriff bringbar ist, wobei die Betätigungseinheit aus einem Elektromotor (10) sowie mindestens einem wirkungsmäßig zwischen dem Elektromotor (11) und dem ersten Reibbelag (4) angeordneten Untersetzungsgetriebe (11) gebildet ist, und wobei das Untersetzungsgetriebe (11) als ein Gewindetrieb ausgebildet ist, der in einem Getriebegehäuse (19) angeordnet ist und ein zylindrisches Führungsteil (20) aufweist, an dem eine Sensoreinrichtung (43,43a) zum Erfassen der Reaktionskraft befestigt ist, **dadurch gekennzeichnet, dass** das Führungsteil (20) im Befestigungsbereich der Sensoreinrichtung (43) eine radiale Öffnung (48, 48a) aufweist, wobei innerhalb oder, in radialer Richtung des Führungsteiles (20) gesehen, oberhalb der Öffnung (48,48a) ein vorgefertigtes und außerhalb des Führungsteiles (20) prüfbares Sensormodul (50) angeordnet ist, das die Sensoreinrichtung (43) bildet.

2. Betätigungseinheit nach Anspruch 1 **dadurch gekennzeichnet, dass** das Sensormodul (50) ein Trägerelement (51) aufweist, auf dem ein Messelement (52) sowie Kontaktierungsmittel (53) angeordnet sind.

3. Betätigungseinheit nach Anspruch 1 oder 2 **dadurch gekennzeichnet, dass** das Trägerelement (51) mit dem Führungsteil (20) verschweißt, vorzugsweise laserverschweißt ist.

4. Betätigungseinheit nach einem der Ansprüche 1 bis 3, **dadurch gekennzeichnet, dass** das Trägerelement (51) als ein Zugkörper ausgebildet ist.

5. Betätigungseinheit nach einem der Ansprüche 1 bis 4, **dadurch gekennzeichnet, dass** nahe am Befestigungsbereich der Sensoreinrichtung (43,43a) im Führungsteil (20) Aussparungen bzw. Schlitze (55) vorgesehen sind.

6. Betätigungseinheit nach Anspruch 4, **dadurch gekennzeichnet, dass** zur Kontaktierung der Sensoreinrichtung ein aus Metall gestanztes Kontaktgitter (45) oder Flexfolien vorgesehen sind.

7. Betätigungseinheit nach Anspruch 6, **dadurch gekennzeichnet, dass** in dem dem Reibbelag (4) zugewandten Bereich des Führungsteiles (20) eine elektrische Schnittstelle bzw. ein Stecker (46) angeordnet ist, an den das Kontaktgitter (45) angeschlossen ist.

## Claims

1. An actuating unit for an electromechanically actuated disc brake for automotive vehicles, which is disposed on a brake caliper wherein two friction linings (4, 5) respectively cooperating with a side face of a brake disc (6) are arranged in a manner displaceable to a limited extent, with one (4) of said friction linings (4, 5) being arranged so as to be directly movable into engagement with the brake disc (3) by means of an actuating element (7), through the actuating unit, while the other friction lining (5) is movable into engagement with the brake disc (3) through the action of a reaction force applied by the brake caliper, wherein the actuating unit comprises an electric motor (10) and at least one reduction gear (11) operatively arranged between the electric motor (10) and the first friction lining (4), and with the reduction gear (11) being formed of a threaded drive accommodated in a gear housing (19) and including a cylindrical guide piece (20) to which a sensor device (43, 43a) for sensing the reaction force is attached,
**characterized in that** the guide piece (20) has a radial aperture (48, 48a) in the area of attachment of the sensor device (43), and a prefabricated sensor module (50) that allows testing outside the guide piece (20) and forms the sensor device (43) is arranged within or, as viewed in a radial direction of the guide piece (20), above the aperture (48, 48a).

2. An actuating unit according to claim 1,
**characterized in that** the sensor module (50) includes a carrier element (51) on which a measuring element (52) and contacting means (53) are arranged.

3. An actuating unit according to claim 1 or 2,
**characterized in that** the carrier element (51) is welded, preferably laser welded, to the guide piece (20).

4. An actuating unit according to any one of claims 1 to 3,
**characterized in that** the carrier element (51) is configured as a tension member.

5. An actuating unit according to any one of claims 1 to 4,
**characterized in that** recesses or slits (55) are provided in the guide piece (20) close to the area of attachment of the sensor device (43, 43a).

6. An actuating unit according to claim 4,
**characterized in that** a contact grid (45) punched from metal or flexible foils are provided for contacting the sensor device.

7. An actuating unit according to claim 6,
**characterized in that** an electric interface or a plug (46), to which the contact grid (45) is connected, is arranged in the area of the guide piece (20) facing the friction lining (4).

## Revendications

1. Unité d'opération d'un frein à disque opérable de manière électromécanique pour des automobiles disposé à un étrier de frein dans lequel sont prévu de manière relativement décalable deux garnitures de frottement (4,5) coopérant avec chacune face latérale d'un frein à disque (6), l'une (4) des garnitures de frottement (4,5) s'engrenant avec le frein à disque (3) par l'intermédiaire de l'élément d'opération (7) de manière directe tandis que l'autre garniture de frottement (5) s'engrenant avec le frein à disque (3) par l'action d'une force réactionnelle appliquée par l'étrier de frein, l'unité d'opération étant formé par un moteur électrique (10) et au moins un réducteur (11) disposé efficacement entre le moteur électrique (11) et la garniture de frottement (4) première, et le réducteur (11) étant configuré comme un filet de traction disposé dans un boîtier de transmission (19) et comportant une unité de guide (20) cylindrique à laquelle est fixé un élément de palpeur (43, 43a) à détecter la force de réaction, **caractérisé en ce que** l'élément de guide (20) dans la région de fixation de l'élément de palpeur (43) comporte une ouverture (38,48a) radiale, un module de palpeur (50) préfabriqué et sensible à l'extérieur de l'ouverture (48, 48a) étant disposé dans ou sur l'ouverture (48, 48a) (vu en sens radiale de l'élément de guide (20) ce qui forme l'ensemble de palpeur (43).

2. Unité d'opération selon la revendication 1, **caractérisé en ce que** le module de palpeur (50) comporte un élément de support (51) sur lequel sont disposé un élément de mesure (52) et un instrument à contact (53).

3. Unité d'opération selon les revendications 1 ou 2, **caractérisé en ce que** l'élément de support (51) est soudé, préférablement par laser, à l'unité de guide (20).

4. Unité d'opération selon l'une des revendications 1 à 3, **caractérisé en ce que** l'élément de support (51) est sous forme d'un élément de traction.

5. Unité d'opération selon l'une des revendications 1 à 4, **caractérisé en ce que** des ouvertures ou des fentes sont prévues dans l'unité de guide (20) près de la région de fixation de l'élément de palpeur (43, 43a).

6. Unité d'opération selon la revendication 4, **caractérisé en ce qu'**une grille de contact (45) découpée de métal ou des feuilles flexibles sont prévues pour contacter l'élément de palpeur.

7. Unité d'opération selon la revendication 6, **caractérisé en ce qu'**un point de coupe électrique ou un contact à fiche (46) est disposé dans la région de l'unité de guide (20) tournée vers la garniture de frottement, auquel est raccordé la grille de contact (45).
